Europäisches Patentamt

European Patent Office

Office européen des brevets

(11) Publication number: **0 433 455 A1**

(19)

(11) Publication number: **0 433 455 A1**

# (12) EUROPEAN PATENT APPLICATION
## published in accordance with Art. 158(3) EPC

(21) Application number: **90907491.6**

(22) Date of filing: **23.05.90**

(86) International application number:
**PCT/JP90/00669**

(87) International publication number:
**WO 90/15372 (13.12.90 90/28)**

(51) Int. Cl.⁵: **G05B 19/403**

(30) Priority: **07.06.89 JP 144449/89**

(43) Date of publication of application:
**26.06.91 Bulletin 91/26**

(84) Designated Contracting States:
**DE FR GB**

(71) Applicant: **FANUC LTD.**
**3580, Shibokusa Aza-Komamba Oshino-mura**
**Minamitsuru-gun, Yamanashi 401-05(JP)**

(72) Inventor: **FUJITA, Naoki Fanuc Mansion**
**Harimoni 6-203**
**3537-1 Shibokusa,**
**Oshinomura2Minamitsuru-gun**
**Yamanashi 401-05(JP)**
Inventor: **MATSUMURA Teruyuki 38-8**
**Matsugaya**
**Hachioji-shi**
**Tokyo 192-03(JP)**
Inventor: **NAGASHIMA Noritake 4193-20**
**Shimotsuuma**
**Yamato-shi**
**Kanagawa 242(JP)**

(74) Representative: **Brunner, Michael John et al**
**GILL JENNINGS & EVERY 53-64 Chancery**
**Lane**
**London WC2A 1HN(GB)**

(54) **PREPARATION METHOD OF MACHINING PROGRAM OF CYLINDRICAL GROOVE SHAPE.**

(57) This invention relates to a preparation method of a machining program of a cylindrical groove shape in an interactive numeric controller for machining a groove shape on the side surface of a cylindrical work by controlling a Z axis and a rotary axis. An orthogonal coordinates system consists of the Z axis and a linear axis (C) that is obtained by developing linearly the rotary axis (C) in the circumferential direction of the work. Necessary data are inputted interactively by use of the coordinates values on the orthogonal coordinates system in such a manner as to let the side surface (12a) of one circumference of the work correspond to a predetermined region on the plane of the orthogonal coordinates system by using the units of the Z axis and the linear axis (C) as length and the machining program of the groove shape is thus prepared. The command of the rotary axis (C) is given on a length basis. Accordingly, even when the diameter of the cylinder is changed, many data can be used as they are and the preparation time of the machining program can be shortened.

EP 0 433 455 A1

F i g . 1 ( a )

# METHOD OF CREATING PROGRAM FOR MACHINING CYLINDRICAL GROOVE CONFIGURATION

TECHNICAL FIELD

The present invention relates to a method of creating a program for machining a cylindrical groove configuration on the circumferential surface of a cylindrical workpiece by controlling a first linear axis and a rotary axis rotating about the first linear axis through an interactive type numerical control apparatus, and more specifically, to a method of creating a program for machining a cylindrical groove configuration, by which a program for machining a similar groove configuration on a workpiece having a different diameter can be easily created.

BACKGROUND ART

Conventionally, when a groove configuration is machined on the circumferential surface of a cylindrical workpiece by a numerical control apparatus (CNC), a machining program has been created using a G code or the like, but program made by this method is difficult unless the operator has a good knowledge of an NC tape format and a language rule and the like used for an automatic programming, and further even a skilled operator needs considerable time to create a program for a three dimensional configuration.

To solve this problem, the applicants filed Japanese Patent Application No. Hei 1-20066 titled "Method of Creating Program for Machining Cylindrical Groove Configuration" on January 30, 1989. In this method, a machining program is interactively created in such a manner that the circumferential surface of a workpiece is caused to correspond to the predetermined region of a coordinate system composed of a linear axis represented by a unit of length and a linear axis made by linearly developing a rotary axis and represented by a unit of angle.

Nevertheless, since the axis obtained by linearly developing the rotary axis is represented by the unit of angle, when, for example, a cylindrical groove having a similar configuration is machined on a workpiece having a different diameter, an angle must be changed accordingly in the creation of a program, which is contrary to the need to simplify the creation of a program.

DISCLOSURE OF THE INVENTION

Taking the above into consideration, an object of the present invention is to provide a method of creating a program for machining a cylindrical groove configuration, by which a program for machining a similar groove configuration on a workpiece having a different diameter can be easily created.

To solve the above problem, in accordance with the present invention, there is provided a method of creating a program for machining a cylindrical groove configuration on the circumferential surface of a cylindrical workpiece by controlling a first linear axis and a rotary axis rotating about the first linear axis through an interactive type numerical control apparatus, which comprises the steps of setting a rectangular coordinate system composed of the first linear axis and a second linear axis obtained by linearly developing the rotary axis in the circumferential direction of the workpiece, representing a unit of the first linear axis and the second linear axis by length, and causing the circumferential surface of the workpiece obtained when the workpiece is once rotated to correspond to a predetermined region on the plane of the rectangular coordinate system, and creating the machining program for a groove configuration by interactively inputting necessary data using coordinate values on the rectangular coordinate system.

The rectangular coordinate system composed of the first linear axis in the lengthwise direction of the cylindrical workpiece and the second linear axis developed in the cylindrical direction of the cylindrical workpiece is set, and the machining program is created by interactively inputting necessary coordinate values of the rectangular coordinate system.

BRIEF DESCRIPTION OF THE DRAWINGS

Figure 1(a) is a diagram explaining a method of creating a machining program of an embodiment according to the present invention;

Figure 1(b) is a diagram showing a procedure of a method of creating a machining program, according to an embodiment of the present invention;

Figure 2 is a display screen of an interactive type numerical control apparatus according to an embodiment of the present invention;

Figure 3 is a diagram showing an example of machining a cylindrical groove configuration;

Figure 4 is a diagram showing an example of machining a similar cylindrical groove configuration on a workpiece having a different diameter;

Figure 5(a) is a diagram explaining a method of creating a machining program according to an embodiment of the present invention, which is applied to a workpiece having a different diameter;

Figure 5(b) is a diagram explaining a procedure of a method of creating a machining program according to an embodiment of the present invention, which is applied to a workpiece having a different diameter; and

Figure 6 shows a general arrangement of an inteactive type numerical control apparatus embodying the present invention.

BEST MODE OF CARRYING OUT THE INVENTION

An embodiment of the present invention will be described below with reference to the drawings.

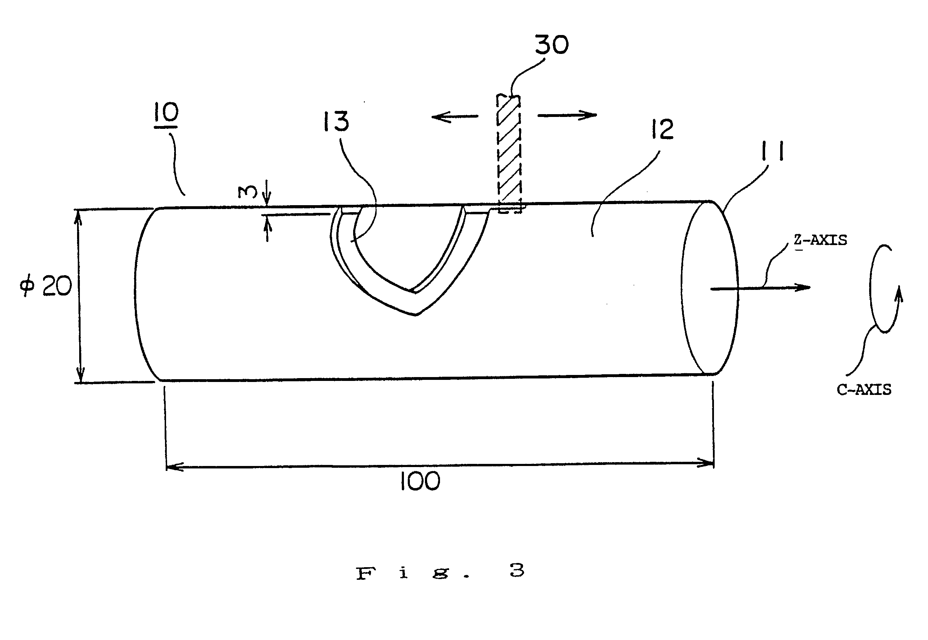

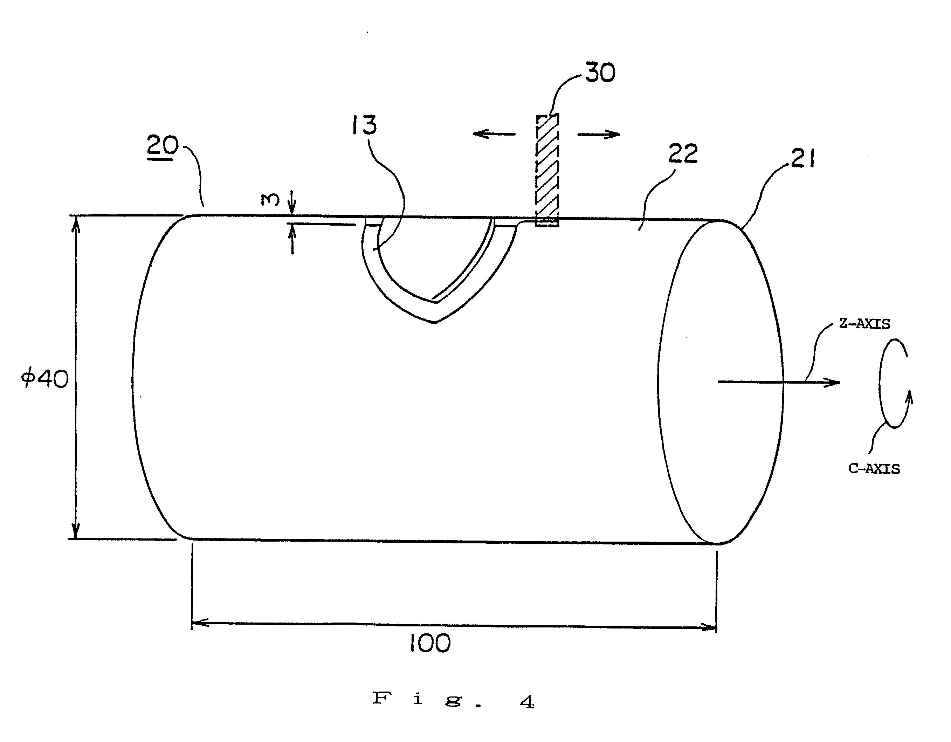

Figure 3 is a diagram showing an example of machining a cylindrical groove configuration, wherein a machining configuration 10 is such that a groove configuration 13 having a predetermined depth of 3 mm and a cylindrical diameter of 14 mm, is machined on the circumferential surface 12 of a cylindrical workpiece 11 having a length of 100 mm and a diameter of 20 mm. The groove configuration 13 is machined by rotating the workpiece 11 in a C-axis direction while controlling a tool 30 in a Z-axis.

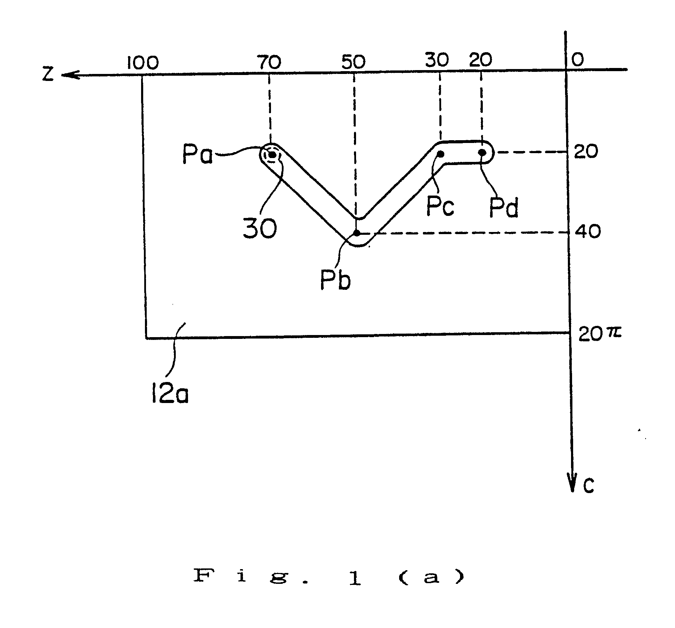

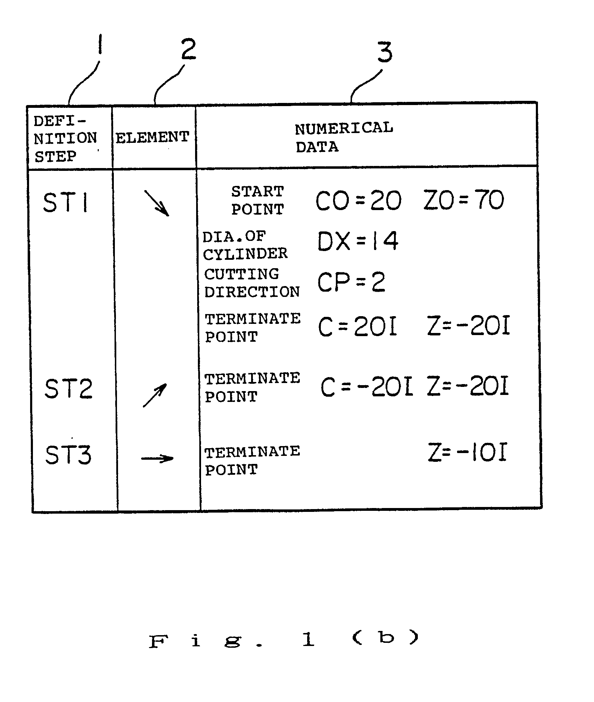

Figure 1(a) is a diagram explaining a method of creating a machining program for the machining configuration 10 according to the embodiment of the present invention and corresponds to the developing diagram of the circumferential surface 12 shown in Figure 3, wherein a horizontal axis is the Z-axis and is represented by a millimeter unit, and a vertical axis is the axis obtained by developing the C-axis in the circumferential direction of the machining configuration 10, also represented by a millimeter unit. A region 12a corresponds to the circuferential surface 12 in Figure 3.

Figure 1(b) is a table showing a procedure of the method of creating the machining program of the machining configuration 10, wherein a definition step 1 consists of respective steps ST1 to ST3, and a configuration constituting element 2 and numerical data 3 are set for each step, which is carried out in such a manner that an operator answers a question by depressing a necessary configuration symbol key and numerical keys each time the question is displayed on a display screen of an interactive type numerical control apparatus. The creation procedure will be described below in accordance with the sequence of the definition steps, and with reference to Figure 1(a).

[ST1] A configuration constituting element of an obliquely lower right direction is set in response to a question concerning a configuration constituting element.

Next, values 20 mm, 70 mm, and 14 mm are set, respectively, in response to a question concerning the C-and Z-coordinates of a start point and a diameter of the cylindrical workpiece. A value "Z" is set in response to a question concerning a parameter of a cutting direction, wherein "Z" means to cut along the center of the configuration constituting element. Note that when the cutting is carried out along the right side or left side of the configuration constituting element, with respect to the moving direction thereof, a value "-1" or "1" is set. Values "20I" and "-20I" are set in response to a question concerning terminate coordinates, to set a position obtained by moving the C-coordinate by 20 mm in the positive direction and moving the Z-coordinate by -20 mm. "I" means an incremental command.

A machining path defined by the above operation is obtained by moving the tool 30 from a start point Pa to a point Pb in Figure 1(a).

[ST2] A configuration constituting element of an obliquely upper right direction is set in response to a question concerning a configuration constituting element. A position obtained by moving the C-coordinate by -20 mm and the Z-coordinate by -20 mm is set in response to a question concerning a terminate coordinate.

This operation defines a machining path for moving the tool 30 from the point Pb to a point Pc.

[ST3] A configuration constituting element of a right direction is set in response to a question concerning a configuration constituting element. A position obtained by moving the Z-coordinate by -10 mm is set in response to a question concerning a terminate coordinate.

This operation defines a machining path for moving the tool 30 from the point Pc to a point Pd, and thereby the creation of the machining program is completed.

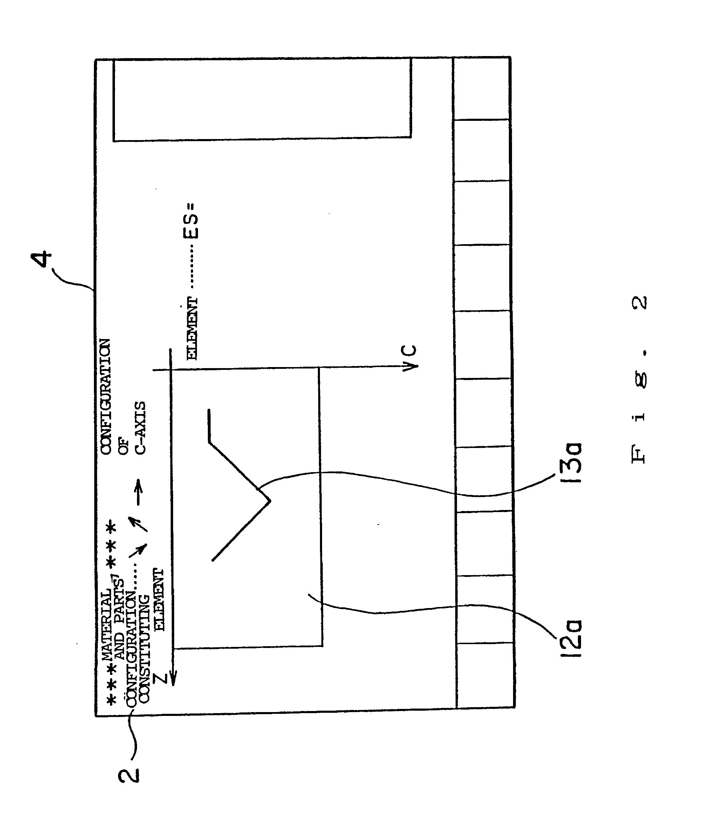

Figure 2 shows a display screen of the interactive type numerical control apparatus after the above operation has been executed, wherein the display screen 4 shows the configuration constituting element 2 in accordance with a set sequence and a machining path 13a corresponding to the groove configuration 13 is drawn in a region 12a.

Next, a method of creating a machining program for machining a groove configuration similar to that shown in Figure 2 on a workpiece having a different diameter will be described.

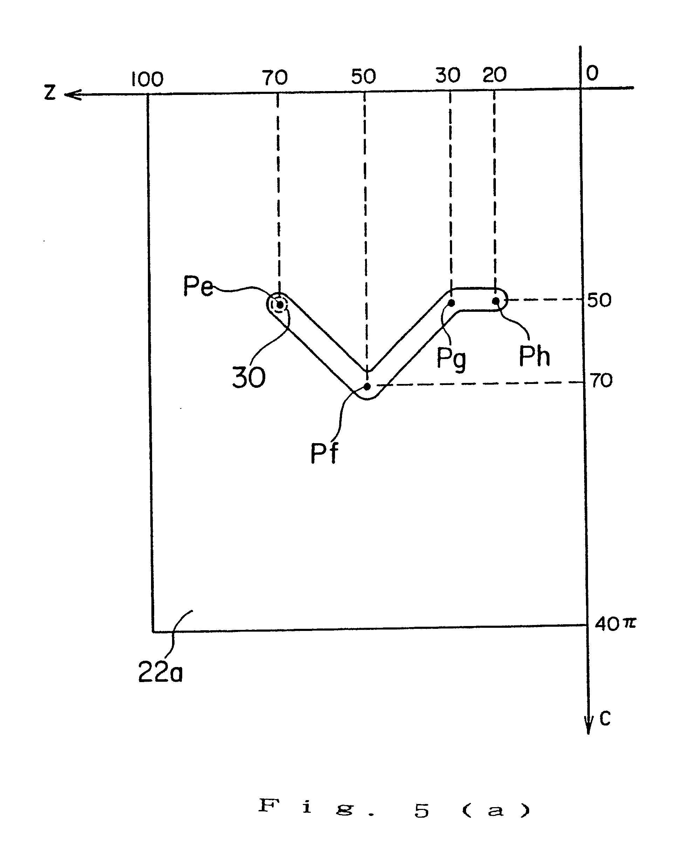

Figure 4 shows an example of this machining, wherein a machining configuration 20 is such that a groove configuration 13 similar to that of the machining configuration 10 is machined on the circumferential surface 22 of a cylindrical workpiece 21 having a length of 100 mm and a diameter of 40 mm. The groove configuration 13 is machined by rotating the workpiece 21 in the C-axis direction while moving the tool 30 in the Z-axis direction.

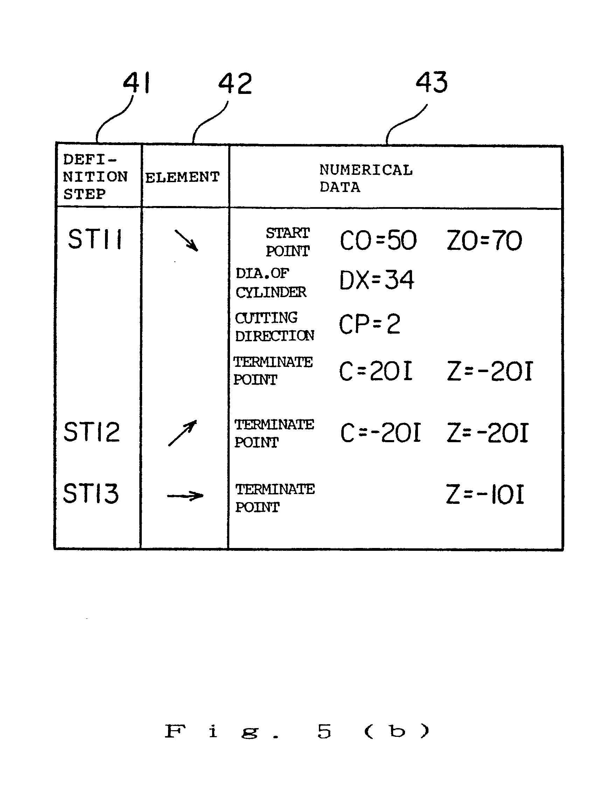

Figure 5(a) is a diagram explaining a method of creating a machining program for the machining configuration 20 according to an embodiment of the present invention, wherein a horizontal axis is a Z-axis and represented by a millimeter unit and the vertical axis is the axis obtained by developing a C-axis along the circumferential direction of the machining configuration 20 and also represented by a millimeter unit. A region 22a corresponds to the circumferential surface 22 in Figure 4.

Figure 5(b) is a table showing a procedure of the method of creating the machining program of the machining configuration 20, wherein a definition step 41 consists of respective steps ST11 to ST13, and a configuration constituting element 42 and numerical data 43 are set for each step. The creation procedure will be described below in accordance with the sequence of the definition steps also referring to Figure 5(a).

[ST11] A configuration constituting element of an obliquely lower right direction is set in response to a question concerning a configuration constituting element, as in Figure 1(b).

Next, values 50 mm, 70 mm, and 34 mm are set, respectively, in response to a question concerning the C- and Z-coordinates of a start point and a diameter of the cylindrical workpiece. A value "2" is set in response to a question concerning a parameter of a cutting direction, as in Figure 1(b), and a point obtained by moving the C-coordinate by 20 mm in the positive direction and the Z-coordinate by -20 mm is set in response to a question concerning a terminate coordinate, in a similar way.

A machining path defined by the above operation is the path obtained by moving the tool 30 from a start point Pe to a point Pf in Figure 5(a).

[ST12] As in Figure 1(b), a configuration constituting element of an obliquely upper right direction is set in response to a question concerning a configuration constituting element, and a position obtained by moving the C-coordinate by -20 mm and the Z-coordinate by -20 mm is set in response to a question concerning a terminate coordinate.

This operation defines a machining path for moving the tool 30 from the point Pf to a point Pg.

[ST13] As in Figure 1(b), a configuration constituting element of a right direction is set in response to a question concerning a configuration constituting element, and a position obtained by moving the Z-coordinate by -10 mm is set in response to a question concerning a terminate coordinate.

This operation defines a machining path for moving the tool 30 from the point Pg to a point Ph and the creation of the machining program is completed.

As described above, even if a diameter of a cylindrical workpiece is changed, input data other than the coordinate of a start point and the data of the diameter of the cylindrical workpiece can be commonly used, whereby a machining program can be easily created.

Note, although not shown, when the machining program has been created, the configuration constituting elements 42, the region 22a, and the groove configuration 13 are drawn on the display screen in the same way as shown in Figure 2.

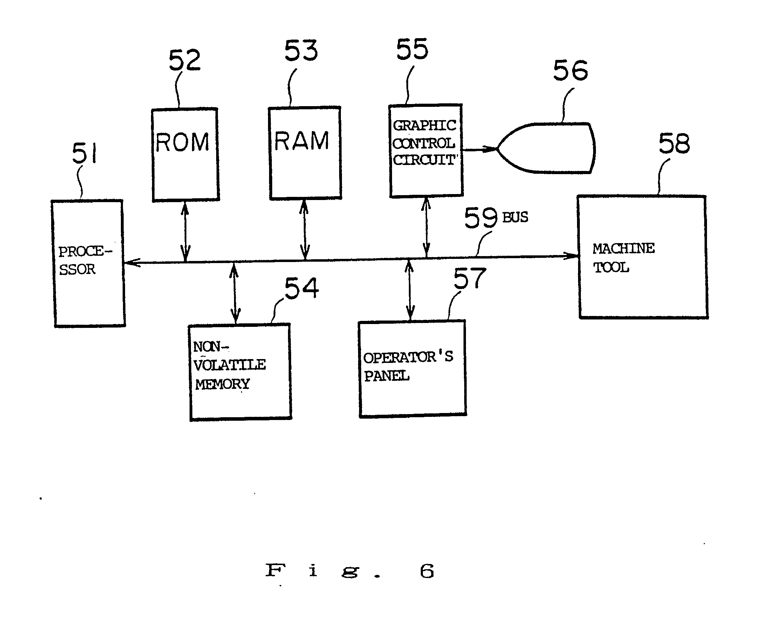

Figure 6 shows a general arrangement of hardware of an interactive type numerical control apparatus embodying the method of creating a machining program for a cylindrical groove configuration according to the present invention. In Figure 6, a processor 51 controls the operation of the interactive type numerical control apparatus as a whole, in accordance with a system program stored in a ROM 52, which is an EPROM or EEPROM. A RAM 53 is composed of a DRAM in which various data and I/O signals are stored, and a non-volatile memory 54 is composed of a CMOS which stores parameters, amounts of pitch error correction, amounts of tool correction and the like, which must be maintained operative even after a power supply is cut off, and thus is supplied with a back-up power source such as a battery.

A graphic control circuit 55 converts digital signals into signals for display, and supplies these signals to a display 56. A CRT or liquid crystal is used as the display 56, to display machining paths, the state of I/O signals, parameters, and the like. An operator's panel 57 composed of a keyboard or the like is used to input various data, and to operate a machine tool 58. These components are interconnected through a bus 59.

Note that, in the machining example of the present embodiment, a rotational angle of the C-axis is in a range of from an angle more than or equal to $0°$ to an angle less than $360°$, but as another machining example, a machining program can be created by which a machining configuration is made by rotating the C-axis by an angle of, for example, less than $0°$ or an angle more than or equal to $360°$, in a similar way, and a machining path shown on the display screen at the time is drawn in such a manner that it overlaps a region of one rotation of a workpiece.

Further, although the interactive type numerical control apparatus is used in the present embodiment, the method of creating a machining program for a cylindrical groove configuration according to the present invention can be also applied to an automatic program creation apparatus.

As described above, according to the present invention, the rectangular coordinate system composed of the first linear axis in the lengthwise direction of a cylindrical workpiece and the second linear axis developed in the circumferential direction of the cylindrical workpiece is set and a machining program is created by interactively setting necessary coordinate values of the rectangular coordinate system, and thus even if a diameter of the cylindrical workpiece is changed, input data other than the coordinates of a start point and data of the diameter of the cylindrical workpiece can be commonly used, whereby a time needed to create a machining program is shortened.

## Claims

1. A method of creating a program for machining a cylindrical groove configuration on the circumferential surface of a cylindrical workpiece by controlling a first linear axis and a rotary axis rotating about the first linear axis through an interactive type numerical control apparatus, comprising the steps of:
setting a rectangular coordinate system composed of said first linear axis and a second linear axis obtained by linearly developing said rotary axis in the circumferential direction of said workpiece;
representing a unit of said first linear axis and said second linear axis by length, and causing the circumferential surface of said workpiece obtained when said workpiece is once rotated to correspond to a predetermined region on the plane of said rectangular coordinate system; and
creating said machining program for a groove configuration by interactively inputting necessary data using coordinate values of said rectangular coordinate system.

2. A method of creating a program for machining a cylindrical groove configuration according to claim 1, wherein said predetermined region is displayed on a display screen and a machining path is drawn in said predetermined region based on said input data.

3. A method of creating a program for machining a cylindrical groove configuration according to claim 2, wherein said predetermined region is caused to correspond to the circumferential surface of said workpiece corresponding to a position of said rotary axis having an angle which is in a range of from an angle more than or equal to 0° to an angle less than 360°, and a machining path corresponding to said angle in a range less than 0° and more than or equal to 360° is displayed by being overlapped on said predetermined region.

Fig. 1 (a)

EP 0 433 455 A1

EP 0 433 455 A1

| 1 | 2 | 3 |

| DEFI-NITION STEP | ELEMENT | NUMERICAL DATA |
|---|---|---|
| ST1 | ↘ | START POINT $CO=20$ $ZO=70$<br>DIA.OF CYLINDER $DX=14$<br>CUTTING DIRECTION $CP=2$<br>TERMINATE POINT $C=20I$ $Z=-20I$ |
| ST2 | ↗ | TERMINATE POINT $C=-20I$ $Z=-20I$ |
| ST3 | → | TERMINATE POINT $Z=-10I$ |

F i g . 1 ( b )

4

2 →

*** MATERIAL AND PARTS *** CONFIGURATION..... CONSTITUTING ELEMENT

↘ ↗ →

Z ←

CONFIGURATION OF C-AXIS

ELEMENT ········ ES=

↓ C

12a     13a

F i g .  2

F i g . 3

EP 0 433 455 A1

Fig. 4

Fig. 5 (a)

EP 0 433 455 A1

| DEFI-NITION STEP | ELEMENT | NUMERICAL DATA | | |
|---|---|---|---|---|
| ST11 | ↘ | START POINT | CO=50 | ZO=70 |
| | | DIA.OF CYLINDER | DX=34 | |
| | | CUTTING DIRECTION | CP=2 | |
| | | TERMINATE POINT | C=20I | Z=-20I |
| ST12 | ↗ | TERMINATE POINT | C=-20I | Z=-20I |
| ST13 | → | TERMINATE POINT | | Z=-10I |

41   42   43

F i g .   5  ( b )

13

Fig. 6

# INTERNATIONAL SEARCH REPORT

International Application No  PCT/JP90/00669

## I. CLASSIFICATION OF SUBJECT MATTER (if several classification symbols apply, indicate all) ⁶

According to International Patent Classification (IPC) or to both National Classification and IPC

Int. Cl⁵    G05B19/403

## II. FIELDS SEARCHED

Minimum Documentation Searched ⁷

| Classification System | Classification Symbols |
|---|---|
| IPC | G05B19/403, 19/415 |

Documentation Searched other than Minimum Documentation
to the Extent that such Documents are included in the Fields Searched ⁸

| | |
|---|---|
| Jitsuyo Shinan Koho | 1971 - 1990 |
| Kokai Jitsuyo Shinan Koho | 1971 - 1990 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| Y | JP, A, 62-293312 (Mitsubishi Electric Corp.), 19 December 1987 (19. 12. 87) (Family: none) | 1 - 3 |
| Y | JP, A, 63-20601 (Mitsubishi Electric Corp.), 28 January 1988 (28. 01. 88) (Family: none) | 1 - 3 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 4, 1990 (04. 07. 90) | July 16, 1990 (16. 07. 90) |

| International Searching Authority | Signature of Authorized Officer |
|---|---|
| Japanese Patent Office | |

Form PCT/ISA/210 (second sheet) (January 1985)